# FASCICULE DE BREVET EUROPEEN

(11) **EP 1 741 579 B1**
(45) Date de publication et mention de la délivrance du brevet: **20.01.2010**
(21) Numéro de dépôt: 06116876.1
(22) Date de dépôt: 10.07.2006
(51) Int. Cl.: B60G 21/055

(54) **Bague d'arrêt destinée à être montée sur une barre stabilisatrice d'une suspension de véhicule automobile**
Befestigungsring zur Verwendung an einem Stabilisatorstab einer Fahrzeugradaufhängung
Fixing ring for mounting on a stabiliser bar in a vehicle suspension

(30) Priorité: 08.07.2005 FR 0507286
(43) Date de publication de la demande: 10.01.2007
(73) Titulaire: ALLEVARD REJNA AUTOSUSPENSIONS, 92210 Saint-Cloud (FR)
(72) Inventeur: Lecoester, François, 59500 Douai (FR); Onquiert, Guillaume, 59170 Croix (FR)
(74) Mandataire: Barbin le Bourhis, Joël

(56) Documents cités:
- WO-A-97/37142
- DE-A1- 4 441 485
- US-A- 210 560
- US-A- 1 492 561
- US-A- 3 913 187
- US-A- 4 183 120
- US-A- 5 013 166
- US-A- 5 509 864
- US-A- 5 520 465
- US-A1- 2003 111 817
- US-A1- 2004 208 729
- US-B1- 6 685 381
- PATENT ABSTRACTS OF JAPAN vol. 1999, no. 13, 30 novembre 1999 (1999-11-30) -& JP 11 210713 A (ORIHASHI SEISAKUSHO:KK), 3 août 1999 (1999-08-03)

## Description

L'invention concerne une bague d'arrêt destinée à être montée sur une portion cylindrique d'une barre stabilisatrice entrant dans la constitution d'une suspension de véhicule automobile.

Une barre stabilisatrice constitue l'un des éléments importants d'un système de suspension de véhicule automobile. Elle doit comporter des moyens permettant de la stabiliser transversalement à la direction longitudinale du véhicule. Cette fonction dite « anti-cheminement » peut être assurée de différentes façons, notamment avec des bagues fixées à la barre.

Notamment, on connaît (voir, par exemple, WO-A-97/37142) une bague composée de deux parties courbes se refermant autour d'un ligament déformable et souple. La bague se ferme en enserrant la barre cylindrique. Ses extrémités comportent des lèvres qui sont destinées à être soudées ensemble latéralement, après montage.

Une autre solution est connue du document US-A-2003/011817. Une bague d'arrêt correspondant au préambule de la revendication 1 est divulguée par US-A-5 013 166 ou US-A-6 685 381. En plus, il est connu du document US-A-2004/0208729 de prévoir une rondelle constituée de deux mâchoires courbes, réunies par une zone de pliage amincie formant charnière, cette zone étant pourvues de tenons et évidements s'imbriquant les uns dans les autres à la fermeture.

L'invention constitue un perfectionnement notable à ce type de bague, permettant d'éviter la soudure.

Plus particulièrement, l'invention concerne une bague d'arrêt destinée à être montée sur une barre stabilisatrice, caractérisée en ce qu'elle est constituée de deux mâchoires courbes d'un seul tenant, réunies par une zone de pliage amincie formant charnière et présentant des extrémités munies de dents susceptibles de coopérer lorsque lesdites machines se referment sur ladite barre, la forme et les dimensions desdites mâchoires étant déterminées pour enserrer ladite barre de torsion en générant de celle-ci une réaction radiale propre à confirmer la fermeture desdites mâchoires.

Pour renforcer la zone où a eu lieu le pliage, les deux mâchoires sont avantageusement pourvues de tenons et évidements courbes s'imbriquant les uns dans les autres à la fermeture.

Pendant la fermeture de la bague autour de la barre cylindrique, la rotation des mâchoires est poursuivie jusqu'à ce que celles-ci subissent une déformation plastique. C'est cette déformation plastique qui imbrique et fait coopérer les dents après que celles-ci sont passées en regard les unes des autres sans se toucher et par conséquent sans s'émousser. En effet, la géométrie de la bague est telle qu'on observe un jeu radial positif entre les dents pendant la fermeture, celui-ci étant réduit voire annulé après déformation plastique de la bague.

Lorsque cette déformation plastique est achevée les dents coopèrent deux à deux et la réaction élastique radiale de la barre de torsion les maintient en contact avec une force suffisante pour que la bague reste fermée. En outre, cette réaction élastique de la barre de torsion entraîne le serrage de la bague et lui permet de rester en un emplacement bien précis sur la barre en résistant aux sollicitations latérales.

La bague d'arrêt peut par exemple être en aluminium ou en alliage d'aluminium. La barre de torsion peut être une barre tubulaire ou pleine.

L'invention sera mieux comprise et d'autres avantages de celle-ci apparaîtront mieux à la lumière de la description qui va suivre, donnée uniquement à titre d'exemple et faite en référence aux dessins annexés dans lesquels :
- la figure 1 est une vue en élévation de la bague d'arrêt conforme à l'invention, avant mise en place sur une portion de barre de torsion cylindrique ;
- la figure 2 est une vue de détail en perspective montrant la bague de la figure 1 montée sur une barre de torsion ;
- la figure 3 est une vue de détail à grande échelle illustrant les positions respectives des extrémités de la bague, portant les dents, en fin de fermeture de la bague mais avant déformation plastique de celle-ci ; et
- la figure 4 est une vue analogue à la figure 3 illustrant les dents après déformation plastique de la bague.

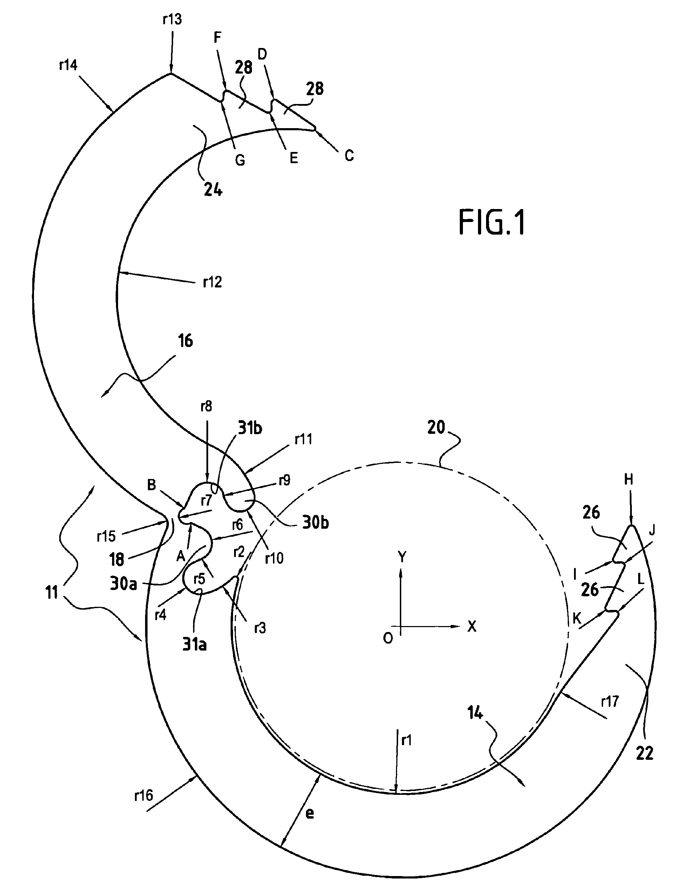

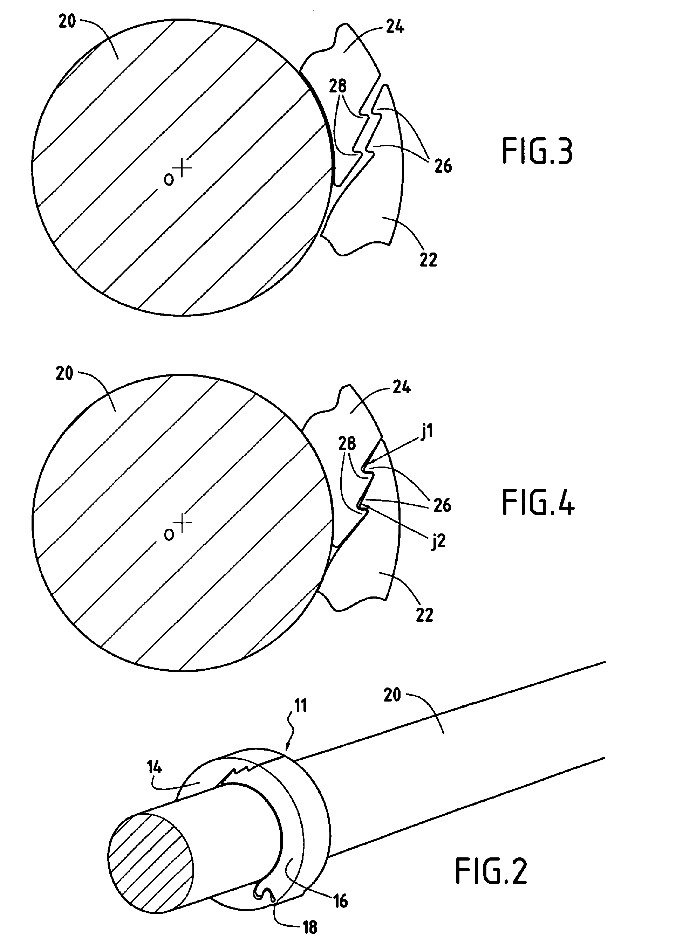

En se référant plus particulièrement à la figure 1 on a représenté une bague d'arrêt 11 conforme à l'invention en position ouverte, c'est-à-dire avant toute déformation. La bague est constituée de deux mâchoires courbes 14, 16 d'un seul tenant, réunies par une zone de pliage amincie 18 formant une sorte de charnière. Chaque mâchoire a, sauf au voisinage de ladite charnière et de son extrémité libre, une section rectangulaire. Dans l'exemple, l'épaisseur e de chaque mâchoire est de 9 mm. La bague est conçue pour une barre de torsion 20 dite barre stabilisatrice, d'un diamètre de 20,7 mm. Sur la figure 1, on a représenté un repère orthonormé XOY dont le centre O correspond au centre de la portion cylindrique de barre 20, lorsque la bague y est fixée comme représenté sur la figure 2.

Pour une description précise de la forme de la bague on a représenté sur la figure 1 un certain nombre de rayons caractéristiques, r1 à r17 et un certain nombre de points caractéristiques A à L. Les deux tableaux suivants donnent respectivement les coordonnées du centre de la portion de cercle et la valeur de son rayon par rapport au repère orthonormé XOY et les coordonnées des points par rapport à ce même repère orthonormé.

La forme de la bague ouverte de la figure 1, telle que représentée et quantifiée par les deux tableaux est considérée comme partie intégrante de l'invention protégée, selon un mode de réalisation possible.

| **N° de rayon** | **X** | **Y** | **Diamètre** |
|---|---|---|---|
| r1 | 0 | 0 | 20,9 |
| r2 | -10,261 | 2,853 | 0,4 |
| r3 | -13,752 | 6,707 | 10 |
| r4 | -12,466 | 2,972 | 2,1 |
| r5 | -13,752 | 6,707 | 5,8 |
| r6 | -12,738 | 5,1 | 2 |
| r7 | -13,279 | 6,87 | 1 |
| r8 | -12,068 | 7,877 | 2 |
| r9 | -13,752 | 6,707 | 6,1 |
| r10 | -10,017 | 7,993 | 1,8 |
| r11 | -13,752 | 6,707 | 9,7 |
| r12 | -7,044 | 20,459 | 20,9 |
| r13 | -14,372 | 33,719 | 1 |
| r14 | -7,044 | 20,459 | 31,3 |
| r15 | -14,86 | 6,326 | 1 |
| r16 | 0 | 0 | 31,3 |
| r17 | 26,161 | -15,582 | 40 |

| **N° de point** | **X** | **Y** |
|---|---|---|
| A | -13,116 | 6,397 |
| B | -13,442 | 7,343 |
| C | -4,881 | 30,682 |
| D | -8,244 | 33,037 |
| E | -8,244 | 31,837 |
| F | -11,244 | 33,49 |
| G | -11,244 | 32,49 |
| H | 14,207 | 6,563 |
| I | 13,012 | 4 |
| J | 14,012 | 4 |
| K | 12,536 | 1 |
| L | 13,736 | 1 |

Comme représenté, les deux mâchoires courbes présentent des portions d'extrémité 22, 24 (opposées à ladite zone de pliage amincie) munies de dents 26, 28 susceptibles de coopérer lors de la fermeture de la bague sur ladite barre de torsion (figure 2).

La forme et les dimensions des mâchoires 14, 16 sont déterminées pour enserrer la barre de torsion en générant de celle-ci une réaction radiale propre à confirmer la fermeture desdites mâchoires.

Plus précisément, la mâchoire 14 comporte une première série de dents 26 s'étendant globalement vers l'intérieur sur une portion d'extrémité 22 d'épaisseur décroissante à partir de sa surface interne. L'autre mâchoire 16 comporte une seconde série de dents 28 s'étendant globalement vers l'extérieur sur une portion d'extrémité 24 d'épaisseur décroissante à partir de sa surface externe. De plus, au voisinage de la zone de pliage, les deux mâchoires sont pourvues de tenons 30a, 30b et évidements 31a, 31b courbes s'imbriquant les uns dans les autres à la fermeture. Cet agencement renforce la cohésion de la bague après fermeture en dépit d'un éventuel écrouissage de la zone de pliage 18.

Pour la fermeture de la bague d'arrêt 11 autour de la barre, on place la mâchoire 14 contenant la barre 20 dans la partie fixe d'une matrice (non représentée) où se trouve creusée l'empreinte de la mâchoire et celle de la barre et on fait pivoter la mâchoire 16 à l'aide d'une partie mobile de ladite matrice jusqu'à ce que les dents 26, 28 destinées à coopérer les unes avec les autres se trouvent en regard. La rotation autour de la zone de pliage amincie 18 formant charnière, pour arriver à la situation illustrée sur la figure 3 est de 90°. On constate que dans cette situation, les dents 26, 28 n'entrent pas en contact les unes avec les autres car il existe un jeu radial positif entre lesdites dents tant que les deux mâchoires 14, 16 n'ont pas subi de déformation plastique. Cette déformation plastique est obtenue par une rotation supplémentaire, c'est-à-dire par un serrage des deux mâchoires de la bague, autour de la barre.

Cette déformation plastique a pour effet de réduire voire annuler le jeu radial positif en imbriquant les dents les unes avec les autres et de provoquer une réaction radiale de la barre de torsion qui a pour effet de confirmer la fermeture de la bague. Après cette déformation plastique, les dents desdites première et deuxième séries coopèrent avec un jeu sensiblement radial j₁, j₂ relativement faible, voire nul, comme visible sur la figure 4. En revanche, pendant la fermeture proprement dite, les dents ne se sont pas émoussées les unes contre les autres en fin de rotation, ce qui garantit un bon accrochage, fiable, des dents les unes avec les autres.

## Revendications

1. Bague d'arrêt (11) destinée à être montée sur une barre stabilisatrice (20), constituée de deux mâchoires courbes (14, 16) d'un seul tenant réunies par une zone de pliage amincie (18) formant charnière, **caractérisée en ce que** l'une des mâchoires (14) comporte une première série de dents (26) s'étendant globalement vers l'intérieur sur une portion d'extrémité (22) d'épaisseur décroissante à partir de sa surface interne et **en ce que** l'autre mâchoire (16) comporte une seconde série de dents (28) s'étendant globalement vers l'extérieur sur une portion d'extrémité (24) d'épaisseur décroissante à partir de sa surface externe, lesdites dents (26, 28) étant susceptibles de coopérer lorsque lesdites mâchoires se referment sur ladite barre, la forme et les dimensions desdites mâchoires étant déterminées pour enserrer ladite barre en générant de celle-ci une réaction radiale propre à confirmer la fermeture desdites mâchoires.

2. Bague d'arrêt selon la revendication 1, **caractérisée en ce que**, au voisinage de ladite zone de pliage (18), les deux mâchoires sont pourvues de tenons (30a, 30b) et évidements (31a, 31b) courbes s'imbriquant les uns dans les autres à la fermeture.

3. Bague d'arrêt selon l'une des revendications précédentes, **caractérisée en ce que**, après fermeture, les mâchoires (14, 16) ont subi une déformation plastique.

4. Bague d'arrêt selon la revendication 1, **caractérisée en ce que**, après fermeture, les dents (26, 28) desdites première et deuxième séries coopèrent avec un jeu sensiblement radial.

5. Barre stabilisatrice, **caractérisée en ce qu'**elle comprend au moins une bague d'arrêt selon l'une des revendications précédentes.

## Claims

1. A stop ring (11) for mounting on a stabilizer bar (20), the ring being constituted by two curved jaws (14, 16) made as a single piece and united by a thin, hinge-forming fold zone (18), the ring being **characterized in that** one of the jaws (14) includes a first series of teeth (26) extending generally towards the inside over an end portion (22) of thickness that decreases from its inside surface, and **in that** the other jaw (16) includes a second series of teeth (28) extending generally towards the outside over an end portion (24) of thickness that decreases from its outside surface, said teeth (26, 28) being suitable for co-operating when said jaws close on said bar, the shape and the dimensions of said jaws being determined so as to clamp onto said bar, generating a radial reaction therefrom suitable for confirming closure of said jaws.

2. A stop ring according to claim 1, **characterized in that**, in the vicinity of said fold zone (18), both jaws are provided with curved tenons (30a, 30b) and recesses (31a, 31b) that interengage with one another on closure.

3. A stop ring according to either preceding claim, **characterized in that**, after closure, the jaws (14, 16) have been subjected to plastic deformation.

4. A stop ring according to claim 1, **characterized in that**, after closure, the teeth (26, 28) of said first and second series co-operate with clearance that is substantially radial.

5. A stabilizer bar, **characterized in that** it includes at least one stop ring according to any preceding claim.

## Patentansprüche

1. Sperring (11), der dazu bestimmt ist, an einer Stabilisierungsstange (20) angebracht zu werden, bestehend aus zwei aus einem Stück gefertigten bogenförmigen Backen (14, 16), die durch einen verjüngten, ein Scharnier bildenden Biegebereich (18) miteinander verbunden sind, **dadurch gekennzeichnet, daß** die eine der Backen (14) eine erste Reihe von Zähnen (26) aufweist, die sich an einem Endabschnitt (22) mit abnehmender Dicke von dessen Innenseite aus insgesamt nach innen erstrecken, und daß die andere Backe (16) eine zweite Reihe von Zähnen (28) aufweist, die sich an einem Endabschnitt (24) mit abnehmender Dicke von dessen Außenseite aus insgesamt nach außen erstrecken, wobei die Zähne (26, 28) geeignet sind, zusammenzuwirken, wenn die Backen sich über der Stange schließen, wobei die Form und die Abmessungen der Backen festgelegt sind, um die Stange unter Erzeugen einer radialen Reaktion der Stange zu umschließen, Reaktion, die geeignet ist, das Schließen der Backen zu bestätigen.

2. Sperring nach Anspruch 1, **dadurch gekennzeichnet, daß** in der Nähe des Biegebereichs (18) die beiden Backen mit bogenförmigen Nasen (30a, 30b) und Ausnehmungen (31 a, 31 b) versehen sind, die beim Schließen ineinander greifen.

3. Sperring nach einem der vorhergehenden Ansprüche, **dadurch gekennzeichnet, daß** die Backen (14, 16) nach dem Schließen eine plastische Verformung erfahren haben.

4. Sperring nach Anspruch 1, **dadurch gekennzeichnet, daß** die Zähne (26, 28) der ersten und der zweiten Reihe nach dem Schließen mit einem im wesentlichen radialen Spiel zusammenwirken.

5. Stabilisierungsstange, **dadurch gekennzeichnet, daß** sie wenigstens einen Sperring nach einem der vorhergehenden Ansprüche umfaßt.
